# EUROPEAN PATENT APPLICATION

(11) **EP 3 225 115 A1**
(43) Date of publication of application: **04.10.2017**
(21) Application number: 15864116.7
(22) Date of filing: 30.11.2015
(51) Int. Cl.: A23L 27/00, A23L 27/10, C11B 9/00

(54) **FLAVOR-IMPROVING AGENT**

(30) Priority: 28.11.2014 JP 2014241628
(71) Applicant: Takasago International Corporation, Tokyo 144-8721 (JP)
(72) Inventor: TAKEUCHI Ryo, Hiratsuka-shi Kanagawa 254-0073 (JP); HIRAMOTO Tadahiro, Hiratsuka-shi Kanagawa 254-0073 (JP)
(74) Representative: Zimmermann & Partner Patentanwälte mbB
(86) International application number: PCT/JP2015/083593
(87) International publication number: WO 2016/084976

(57) **Abstract**

The present invention provides a flavor-improving agent comprising an extract from a plant of the genus Quercus of the family Fagaceae, wherein the ratio of whisky lactone content to total polyphenol content is 0.2% or higher; and a method for the manufacture thereof.

## Description

### Technical Field

The present invention relates to a flavor-improving agent to be added to foods and beverages, and a method for producing the flavor-improving agent.

### Background Art

Various flavor-improving agents have been used to enhance or improve the flavor and odor of foods and beverages. Especially, to distinguish a product from others, it is desirable that the product has great properties in intensity, spreading, continuity, and the like of the flavor required for the product, and there is a demand for a novel technique which enables a wide variety of flavor improvements of foods and beverages. For example, as non-alcoholic beverages have become popular recently, there are demands for products having excellent alcoholic savor.

Japanese Patent No. 4842736 describes a taste-improving agent for an alcoholic beverage, the taste-improving agent comprising a purified extract from a plant of the genus Quercus of the family Fagaceae, the purified extract being obtained by subjecting an extraction liquid obtained by extraction from the plant of the genus Quercus of the family Fagaceae with an aqueous ethanol solution to adsorption onto a styr-benzene-based synthetic resin, which is a porous resin, followed by elution with ethanol.

Meanwhile, Japanese Patent Application Publication No. 2008-48690 describes a flavor improvement composition for flavor improvement of foods and beverages, the flavor improvement composition comprising, as an active ingredient, a solvent extract which is obtained from the genus Quercus of the family Fagaceae and which comprises lyoniresinol as a main component.

However, various modes of flavor improvement are required for foods and beverages, and there is still a demand for development of a novel technique for further improving the flavor quality, the flavor intensity, and the like.

### Summary of Invention

An object of the present invention is to provide a flavor-improving agent to be added to foods and beverages and a method for producing the flavor-improving agent.

The present inventors have found that addition of an extract which is from a plant of the genus Quercus of the family Fagaceae and which has a whisky lactone content and a total polyphenol content at a specific ratio to a food or beverage provides excellent flavor improvement of the food or beverage, and this finding has led to the completion of the invention of the present application.

Specifically, the present invention provides a flavor-improving agent comprising an extract from a plant of the genus Quercus of the family Fagaceae, wherein a ratio of whisky lactone content to total polyphenol content is 0.2% or higher.

The present invention also provides a flavor composition comprising the above-described flavor-improving agent.

The present invention also provides a food or beverage comprising the above-described flavor-improving agent or flavor composition.

The present invention also provides a method for producing the above-described flavor-improving agent, the method comprising performing extraction from the plant of the genus Quercus of the family Fagaceae with a solvent having a permittivity of 21 or lower or supercritical carbon dioxide.

The present invention also provides a method for producing the above-described flavor-improving agent, the method comprising: contacting a primary extract from the plant of the genus Quercus of the family Fagaceae with a resin; removing by elution a water-soluble fraction adsorbed on the resin; and then recovering hydrophobic components adsorbed on the resin.

The present invention also provides a method for producing the above-described flavor-improving agent, the method comprising adding whisky lactone to a primary extract from the plant of the genus Quercus of the family Fagaceae such that the ratio of whisky lactone content to total polyphenol content is 0.2% or higher.

The present invention also provides a method for improving a flavor of a food or beverage, the method comprising adding the above-described flavor-improving agent or flavor composition to a food or beverage.

The use of an extract which is from a plant of the genus Quercus of the family Fagaceae and which has a whisky lactone content and a total polyphenol content at a specific ratio makes it possible to obtain an excellent flavor improvement effect on a food or beverage.

### Description of Embodiments

### Flavor-Improving Agent

A flavor-improving agent of the present invention comprises an extract from a plant of the genus Quercus of the family Fagaceae, wherein the ratio of whisky lactone content to total polyphenol content is 0.2% or higher.

The plant of the genus Quercus of the family Fagaceae used in the present invention is not particularly limited, as long as the plant falls within those collectively referred to as oaks. Especially, plants used as materials for barrels for whisky storage are preferable, and examples thereof include white oak (Quercus alba), common oak (English oak) (Quercus robur), bao li (Quercus serrata), sessile oak (Quercus petraea, Quercus sessilis, Quercus sessiliflora), and the like. Among the above-described oaks, white oak (Quercus alba) is particularly preferable in that white oak is readily available because of its high production and in that it contains a large amount of whisky lactone.

Portions of the above-described plants used for the extraction are not particularly limited, and it is particularly preferable to use portions called timber, such as trunks, used as materials for barrels. It is preferable to use the plant materials after being crushed into the form of chips, sawdust, or flakes. The sizes of the plant materials are not particularly limited. In a case of chips, a shape with 1 cm or less in thickness and 5 cm or less in length is preferable. Meanwhile, in a case of flakes, for example, the thickness may be 1 to 10 mm, and for example, 2 to 5 mm. If necessary, the plant material may also be subjected to an enzymatic treatment, a swelling treatment under water vapor pressure, or the like. The oak material may also be a used barrel material in which whisky had been stored, or a waste material from barrel production. In addition, it is possible to perform a heat treatment such as roasting or charring to impart a characteristic odor.

The extract from a plant of the genus Quercus of the family Fagaceae used in the present invention can be obtained by various methods, such as extraction with a certain solvent or supercritical carbon dioxide, recovery of hydrophobic components using a resin, or addition of whisky lactone to a primary extract obtained by a conventional method and having a low whisky lactone content, as described in Examples later. Any ones of the above-described methods may be used in combination, as appropriate. The present invention is directed to extracts obtained by the methods as described above from plants of the genus Quercus of the family Fagaceae. In such an extract, the ratio of whisky lactone content to total polyphenol content is 0.2% or higher, and preferably 0.3% or higher, 0.4% or higher, 0.5% or higher, and 1% or higher. The above-described ratio is, for example, 0.2% or higher and 12000% or lower, preferably 0.2% or higher and 6500% or lower, more preferably 0.2% or higher and 200% or lower, more preferably 0.3% or higher and 200% or lower, further preferably 0.4% or higher and 150% or lower, and further preferably 0.4% or higher and 50% or lower.

Here, the above-described ratio of whisky lactone content to total polyphenol content means the value of the percentage (%) of the whisky lactone content (% by weight) relative to the total polyphenol content (% by weight) contained in the extract. The content of each component can be measured by a method known to a person skilled in the art. For example, the total polyphenol content can be measured by a quantitative analysis based on the Folin Ciocalteu method, while the whisky lactone content can be measured by gas chromatographic quantification. A first method for obtaining the extract from a plant of the genus Quercus of the family Fagaceae is extraction from a plant of the genus Quercus of the family Fagaceae with a solvent having a permittivity of 21 or lower, preferably having a permittivity of 19 or lower, for example, 7 or lower. Preferred examples of the solvent include ethyl acetate (permittivity: 6.4), acetone (permittivity: 19.5), isopropyl alcohol (permittivity: 18.3), 1-propanol (permittivity: 20.1), normal hexane (permittivity: 1.9), isooctane (permittivity: 3.0 to 3.5), benzyl alcohol (permittivity: 13.1), butanol (permittivity: 18), butyl acetate (permittivity: 5.0), ethyl butyrate (permittivity: 5.1), 1-hexanol (permittivity: 13.3), 1-octanol (permittivity: 10.3), triacetin (permittivity: 7.1), tripalmitin (permittivity: 2.92), triolein (permittivity: 3.20), soybean oil (permittivity: 2.9 to 3.5), and the like. One of these solvents may be used alone, or a combination thereof may be used as a mixture. Of the above-described solvents, ethyl acetate, acetone, isopropyl alcohol, 1-propanol, and normal hexane are preferable.

A specific extraction method is not particularly limited, and the extraction is performed by contacting a plant material with the above-described solvent, for example, by immersing, stirring, or heating under reflux the plant material in the solvent or the like. Of these extraction methods, immersion extraction is preferable. Conditions such as the temperature, time, and pressure for the extraction can be determined, as appropriate, by a person skilled in the art according to the specific extraction mode employed and the like. The temperature may be either normal temperature or elevated temperature, and determined according to the types of the plant material and the solvent, and the like. When heating is employed, the upper limit is determined, as appropriate, within a range of, for example, from 110 to 140°C, if necessary. For example, in a case of heating under reflux, the temperature varies depending on the solvent, and the heating under reflux is preferably performed at a temperature not lower than the boiling point of the solvent under atmospheric pressure.

The extraction time greatly varies depending on the type and shape of the plant material, the specific extraction mode, and the like, and can be adjusted by a person skilled in the art, as appropriate. For example, the extraction time is set within the time range from about 5 hours to about 1 month. For example, in a case of immersion extraction, the extraction time can be 100 hours, preferably 60 to 84 hours, and for example, 72 hours. The ratio of the plant material to the solvent can also be determined, as appropriate, by a person skilled in the art based on the shape of the plant material, the type of the solvent, and the like. The weight ratio of the plant material to the solvent can be set to 1:1 to 1:20, preferably 1:2 to 1:15, more preferably 1: 3 to 1:10, further preferably 1:3 to 1:6, or the like. The pressure can be determined according to the above-described temperature condition, the type of the solvent, and the like, and can be, for example, in the range from about normal pressure to about 0.4 MPa, preferably 0.3 MPa or lower, and more preferably 0.2 MPa or lower. Note that the same plant material may be subjected to the extraction multiple times, and the number of times of the extraction can be set to, for example, 10 or less, preferably 7 or less, more preferably 5 or less, and further preferably 3 or less. Alternatively, the same solvent may be used multiple times for extraction from different raw materials, and the number of times of the extraction can be set to 10 or less, preferably 7 or less, more preferably 5 or less, and further preferably 3 or less.

After the above-described extraction operation, the extraction liquid is separated by any method such as standing or centrifugation, and, if necessary, concentrated and/or diluted. Then, the resultant material can be used as the flavor-improving agent. The concentration can be performed by vacuum concentration, concentration under a normal pressure condition, or the like. In addition, when dilution is performed, it is possible to use the same solvent as that used for the extraction, or another solvent which is an edible liquid such as propylene glycol, glycerin, triacetin, medium-chain fatty acid triglyceride, vegetable fat or fatty oil, animal fat or fatty oil, or the like. It is also possible to once perform a concentration operation on the extraction liquid, and then dilute the concentrate by adding another solvent thereto. It is also possible to prepare the flavor-improving agent in a powdery form by using an excipient.

Meanwhile, a second method for obtaining the extract from a plant of the genus Quercus of the family Fagaceae is extraction from a plant of the genus Quercus of the family Fagaceae with supercritical carbon dioxide.

The extraction with supercritical carbon dioxide can be performed by a method well-known to a person skilled in the art. Conditions for the supercritical extraction are, for example, such that the temperature is 30 to 100°C, and preferably 40 to 80°C, and the pressure is 10 to 50 MPa, and preferably 20 to 40 MPa. In addition, the flow rate of carbon dioxide can be 3 to 30 kg/h, and preferably 5 to 15 kg/h. In order to adjust the properties of the eluate, it is also possible to use a solvent such as ethyl alcohol as an entrainer. After being concentrated and/or diluted in the same manner as in the above-described first method, the obtained extract can be used as the flavor-improving agent.

Moreover, a third method for obtaining the extract from a plant of the genus Quercus of the family Fagaceae comprises: contacting a primary extract from the plant of the genus Quercus of the family Fagaceae with a resin; removing by elution a water-soluble fraction adsorbed on the resin; and then recovering hydrophobic components adsorbed on the resin. The above-described resin is preferably a styrene-divinylbenzene copolymer, and, for example, it is preferable to use DIAION HP21, SEPABEADS SP825L, SEPABEADS SP850, SEPABEADS SP700, SEPABEADS SP70, SEPABEADS SP207, or DIAIONHP-20 manufactured by Mitsubishi Chemical Corporation, Amberlite XAD2, Amberlite XAD4, Amberlite XAD16, or Amberlite FPX66 manufactured by Dow Chemical, or the like.

Note that the primary extract in the present invention is a term used for convenience to distinguish this extract from the finally obtained plant extract of the present invention, and means any extract which is obtained by a conventional method using ethanol or the like, and which does not satisfy the whisky lactone:total polyphenol ratio specified in the present application (i.e., which has a low whisky lactone content). For example, for the primary extract, an ordinary commercially available oak extract manufactured by FRUTAROME is used, and an aqueous solution of the oak extract diluted, as appropriate, in distilled water is stirred with the resin, or the aqueous solution of the oak extract is passed through a resin tower filled with the resin to collect components adsorbed on the resin. Then, the obtained resin is washed with distilled water or the like to remove the water-soluble fraction, and then the hydrophobic components adsorbed on the resin can be recovered by elution with an edible solvent such as isopropyl alcohol, ethyl alcohol, propylene glycol, or glycerin, an aqueous solution thereof, or a mixture of any ones of these solvents. The thus recovered extraction components can be used as they are. Alternatively, after being concentrated and/or diluted as in the above-described first method, the thus recovered extraction components can be used as the flavor-improving agent of the present invention, which satisfies the whisky lactone:total polyphenol ratio specified in the present application.

Moreover, a fourth method for obtaining the extract from a plant of the genus Quercus of the family Fagaceae comprises adding whisky lactone to a primary extract from the plant of the genus Quercus of the family Fagaceae such that a ratio of whisky lactone content to total polyphenol content is 0.2% or higher. Especially, the addition of whisky lactone to an extract obtained by a conventional method using ethanol or the like or a commercially available oak extract (for example, manufactured by FRUTARONE) each of which has a low whisky lactone content makes it possible to obtain an extract which satisfies the whisky lactone:total polyphenol ratio specified in the present application. The whisky lactone used is not particularly limited, and any commercially available product can be used such as whisky lactone (Code: M2516) manufactured by Tokyo Chemical Industry Co., Ltd.

For example, a 10% solution of a commercially available oak extract is prepared by dilution in a 50% aqueous propylene glycol solution, and commercially available whisky lactone is incorporated into the obtained diluted material, so that the whisky lactone content in terms of solid content can be adjusted to 0.2 to 10% by weight, preferably 0.3 to 8% by weight, and further preferably 0.5 to 7% by weight.

### Flavor Composition

The flavor-improving agent of the present invention can be used after being incorporated into a flavor composition. The concentration of the flavor-improving agent in the flavor composition can be set, as appropriate, by a person skilled in the art according to the required mode of flavor improvement of a food or beverage. For example, the concentration of the flavor-improving agent is preferably 0.001 to 0.5% by weight, more preferably 0.005 to 0.2% by weight, and further preferably 0.01 to 0.1% by weight relative to the flavor composition.

The flavor composition of the present invention may further comprise various compounding agents and additives used in the technical field. Examples of compounding agents and additives which can be mixed with the flavor composition of the present invention include, but are not particularly limited to, antioxidants, known antiseptics and antibacterial agents, pH adjusters, emulsifiers, cooling sensates, warming sensates, various flavor materials, and the like. Two or more of the above-described compounding agents and additives may be co-used in any combination.

More specifically, the antioxidants include butylhydroxytoluene, butylhydroxyanisole, citric acid, glutathione, selenium, lycopene, vitamin A, vitamin E, vitamin C, and the like, as well as pyrrolopyrrole derivatives, free radical scavengers obtained from extracts of various plants, enzymes having antioxidation characteristics such as superoxide dismutase and glutathione peroxidase, and the like.

The antiseptics and the antibacterial agents include benzoic acid, sodium benzoate, isopropyl para-hydroxybenzoate, isobutyl para-hydroxybenzoate, ethyl para-hydroxybenzoate, methyl para-hydroxybenzoate, butyl para-hydroxybenzoate, propyl para-hydroxybenzoate, sodium sulfite, sodium hyposulfite, potassium pyrosulfite, sorbic acid, potassium sorbate, sodium dehydroacetate, thujaplicin, udo (Aralia cordata) extract, Japanese snowbell extract, Artemisia capillaris extract, oolong tea extract, milt protein extract, enzymatically hydrolyzed coix extract, tea catechins, apple polyphenols, pectin digests, chitosan, lysozymes, ε-polylysine, and the like.

The pH adjusters include adipic acid, citric acid, trisodium citrate, glucono delta-lactone, gluconic acid, potassium gluconate, sodium gluconate, DL-tartaric acid, L-tartaric acid, DL-potassium hydrogen tartrate, L-potassium hydrogen tartrate, DL-sodium tartrate, L-sodium tartrate, potassium carbonate (anhydrous), sodium hydrogen carbonate, sodium carbonate, carbon dioxide, lactic acid, sodium lactate, glacial acetic acid, disodium dihydrogen pyrophosphate, fumaric acid, monosodium fumarate, DL-malic acid, DL-sodium malate, phosphoric acid, dipotassium hydrogen phosphate, potassium dihydrogen phosphate, disodium hydrogen phosphate, sodium dihydrogen phosphate, and the like.

Examples of the emulsifiers include fatty acid monoglycerides, fatty acid diglycerides, fatty acid triglycerides, propylene glycol fatty acid esters, sucrose fatty acid esters, polyglycerin fatty acid esters, lecithin, enzymatically modified lecithin, starch, modified starch, dextrin, sorbitan fatty acid esters, Quillaia extract, gum arabic, gum tragacanth, guar gum, karaya gum, xanthan gum, pectin, alginic acid, salts thereof, carrageenan, gelatin, casein, and the like.

Examples of the cooling sensates include:
compounds such as menthol, menthone, camphor, pulegol, isopulegol, cineol, cubebol, menthyl acetate, pulegyl acetate, isopulegyl acetate, menthyl salicylate, pulegyl salicylate, isopulegyl salicylate, 3-(l-menthoxy)propane-1,2-diol, 2-methyl-3-(l-menthoxy)propane-1,2-diol, 2-(l-menthoxy)ethan-1-ol, 3-(l-menthoxy)propan-1-ol, 4-(l-menthoxy)butan-1-ol, menthyl 3-hydroxybutanoate, menthyl glyoxylate, p-menthane-3,8-diol, 1-(2-hydroxy-4-methylcyclohexyl)ethanone, menthyl lactate, menthone glycerin ketal, menthyl 2-pyrrolidone-5-carboxylate, monomenthyl succinate, alkali metal salts of monomenthyl succinate, alkaline earth metal salts of monomenthyl succinate, monomenthyl glutarate, alkali metal salts of monomenthyl glutarate, alkaline earth metal salts of monomenthyl glutarate, N-[[5-methyl-2-(1-methylethyl)cyclohexyl]carbonyl]glycine, p-menthane-3-carboxylic acid glycerol ester, menthol propylene glycol carbonate, menthol ethylene glycol carbonate, p-menthane-2,3-diol, 2-isopropyl-N,2,3-trimethylbutanamide, N-ethyl-p-menthane-3-carboxamide, 3-(p-menthane-3-carboxamide)ethyl acetate, N-(4-methoxyphenyl)-p-menthanecarboxamide, N-ethyl-2,2-diisopropylbutanamide, N-cyclopropyl-p-menthanecarboxamide, N-(4-cyanomethylphenyl)-p-menthanecarboxamide, N-(2-pyridin-2-yl)-3-p-menthanecarboxamide, N-(2-hydroxyethyl)-2-isopropyl-2,3-dimethylbutanamide, N-(1,1-dimethyl-2-hydroxyethyl)-2,2-diethylbutanamide, cyclopropanecarboxylic acid (2-isopropyl-5-methylcyclohexyl)amide, N-ethyl-2,2-diisopropylbutanamide, N-[4-(2-amino-2-oxoethyl)phenyl]-p-menthanecarboxamide, 2-[(2-p-menthoxy)ethoxy]ethanol, 2,6-diethyl-5-isopropyl-2-methyltetrahydropyran, and trans-4-tert-butylcyclohexanol, as well as racemates thereof and optically active forms thereof;
sugar alcohols such as xylitol, erythritol, dextrose, and sorbitol; natural products such as Japanese mint oil, peppermint oil, spearmint oil, and eucalyptus oil;
compounds described in Japanese Patent Application Publication Nos. 2001-294546, 2005-343915, 2007-002005, 2009-263664, 2010-254621, 2010-254622, and 2011-079953, United States Patent Nos. 4136163, 4150052, 4178459, 4190643, 4193936, 4226988, 4230688, 4032661, 4153679, 4296255, 4459425, 5009893, 5266592, 5698181, 5725865, 5843466, 6231900, 6277385, 6280762, 6306429, 6432441, 6455080, 6627233, 7078066, 6783783, 6884906, 7030273, and 7090832, United States Patent Application Publication Nos. 2004/0175489, 2004/0191402, 2005/0019445, 2005/0222256, 2005/0265930, 2006/015819, and 2006/0249167, European Patent Application Publication No. 1689256, and International Publication Nos. WO2005/082154, WO2005/099473, WO2006/058600, WO2006/092076, and WO2006/125334; and the like.

Examples of the warming sensates include:
compounds such as vanillyl methyl ether, vanillyl ethyl ether, vanillyl propyl ether, vanillyl isopropyl ether, vanillyl butyl ether, vanillyl amyl ether, vanillyl isoamyl ether, vanillyl hexyl ether, isovanillyl methyl ether, isovanillyl ethyl ether, isovanillyl propyl ether, isovanillyl isopropyl ether, isovanillyl butyl ether, isovanillyl amyl ether, isovanillyl isoamyl ether, isovanillyl hexyl ether, ethyl vanillyl methyl ether, ethyl vanillyl ethyl ether, ethyl vanillyl propyl ether, ethyl vanillyl isopropyl ether, ethyl vanillyl butyl ether, ethyl vanillyl amyl ether, ethyl vanillyl isoamyl ether, ethyl vanillyl hexyl ether, vanillin propylene glycol acetal, isovanillin propylene glycol acetal, ethyl vanillin propylene glycol acetal, vanillyl butyl ether acetic acid ester, isovanillyl butyl ether acetic acid ester, ethyl vanillyl butyl ether acetic acid ester, 4-(l-menthoxymethyl)-2-(3'-methoxy-4'-hydroxyphenyl)-1,3-di oxolan, 4-(l-menthoxymethyl)-2-(3'-hydroxy-4'-methoxyphenyl)-1,3-di oxolan, 4-(1-menthoxymethyl)-2-(3'-ethoxy-4'-hydroxyphenyl)-1,3-dio xolan, capsaicin, dihydrocapsaicin, nordihydrocapsaicin, homodihydrocapsaicin, homocapsaicin, biscapsaicin, trishomocapsaicin, nornorcapsaicin, norcapsaicin, capsaicinol, vanillyl caprylamide (vanillyl octylic acid amide), vanillyl pelargonamide (vanillyl nonylic acid amide), vanillyl caproamide (vanillyl decylic acid amide), vanillyl undecanamide (vanillyl undecylic acid amide), N-trans-feruloyltyramine, N-5-(4-hydroxy-3-methoxyphenyl)-2E,4E-pentadienoylpiperidin e, N-trans-feruloylpiperidine, N-5-(4-hydroxy-3-methoxyphenyl)-2E-pentenoylpiperidine, N-5-(4-hydroxyphenyl)-2E,4E-pentadienoylpiperidine, piperine, isopiperine, chavicine, isochavicine, piperamine, piperetine, piperolein B, retrofractamide A, piperaside, Ginsenoside, piperiline, piperamide C5:1(2E), piperamide C7:1(6E), piperamide C7:2(2E,6E), piperamide C9:1(8E), piperamide C9:2(2E,8E),piperamide C9:3(2E,4E,8E), fagaramide, sanshool-I, sanshool-II, hydroxysanshool, sanshoamide, gingerol, shogaol, zingerone, methylgingerol, paradol, spilanthol, chavicine, polygodial (tadeonal), isopolygodial, dihydropolygodial, and tadeone, as well as racemates thereof and optically active forms thereof;
natural products such as capsicum pepper oil, capsicum pepper oleoresin, ginger oleoresin, jambu oleoresin (extract from Spilanthes acmella L. var. oleracea Clarke), Japanese pepper extract, sanshoamide, black pepper extract, white pepper extract, and Polygonum extract;
compounds described in Japanese Patent Application Publication Nos. Hei 8-225564 and 2007-015953, Published Japanese Translation of PCT International Application Nos. 2007-510634 and 2008-505868, International Publication Nos. WO2007/013811 and WO2003/106404, European Patent Application Publication No. 1323356, German Patent Application Publication No. 10351422, and United States Patent Application Publication Nos. 2005/0181022 and 2008/0038386; and the like.

As the various flavor materials, it is possible to use, for example, naturally occurring flavors, naturally occurring essential oils, and the like, as well as various synthetic flavors. These flavors are not particularly limited, as long as they can be used for foods, beverages, pharmaceuticals, or oral care products. Examples of the flavors include acetaldehyde, ethyl acetoacetate, acetophenone, anisaldehyde, amyl alcohol, α-amylcinnamaldehyde, methyl anthranilate, ionone, isoamyl alcohol, isoeugenol, isoamyl isovalerate, ethyl isovalerate, isothiocyanates, allyl isothiocyanate, isovaleraldehyde, isobutanol, isobutyraldehyde, isopropanol, isopentylamine, indole and derivatives thereof, γ-undecalactone, esters, a mixture of 2-ethyl 3,5-dimethylpyrazine and 2-ethyl 3,6-dimethylpyrazine, ethylvanillin, 2-ethylpyrazine, 2-ethyl-3-methylpyrazine, 2-ethyl-5-methylpyrazine, 5-ethyl-2-methylpyrazine, ethers, eugenol, octanal, ethyl octanoate, isoamyl formate, geranyl formate, citronellyl formate, cinnamic acid, ethyl cinnamate, methyl cinnamate, ketones, geraniol, isoamyl acetate, ethyl acetate, geranyl acetate, cyclohexyl acetate, citronellyl acetate, cinnamyl acetate, terpinyl acetate, phenethyl acetate, butyl acetate, benzyl acetate, l-menthyl acetate, linalyl acetate, methyl salicylate, 2,3-diethyl-5-methylpyrazine, allyl cyclohexylpropionate, citral, citronellal, citronellol, 1,8-cineol, fatty acids, aliphatic higher alcohols, aliphatic higher aldehydes, aliphatic higher hydrocarbons, 2,3-dimethylpyrazine, 2,5-dimethylpyrazine, 2,6-dimethylpyrazine, 2,6-dimethylpyridine, cinnamyl alcohol, cinnamaldehyde, thioethers, thiols, decanal, decanol, ethyl decanoate, 5,6,7,8-tetrahydroquinoxaline, 2,3,5,6-tetramethylpyrazine, terpineol, terpene hydrocarbons, 2,3,5-trimethylpyrazine, γ-nonalactone, vanillin, para-methylacetophenone, valeraldehyde, hydroxycitronellal, hydroxycitronellal dimethyl acetal, piperidine, piperonal pyrazine, pyrrolidine, isoamyl phenylacetate, isobutyl phenylacetate, ethyl phenylacetate, 2-(3-phenylpropyl)pyridine, phenethylamine, phenol ethers, phenols, butanol, butylamine, butyraldehyde, furfural and derivatives thereof, propanol, propionaldehyde, propionic acid, isoamyl propionate, ethyl propionate, benzyl propionate, hexanoic acid, allyl hexanoate, ethyl hexanoate, ethyl heptanoate, l-perillaldehyde, benzyl alcohol, benzaldehyde, 2-pentanol, 1-penten-3-ol, aromatic alcohols, aromatic aldehydes, d-borneol, maltol, methyl N-methylanthranilate, 5-methylquinoxaline, 6-methylquinoline, 5-methyl-6,7-dihydro-5H-cyclopentapyrazine, methyl β-naphthyl ketone, 2-methylpyrazine, 2-methylbutanol, 3-methyl-2-butanol, 2-methylbutyraldehyde, 3-methyl-2-butenal, 3-methyl-2-butenol, dl-menthol, l-menthol, butyric acid, isoamyl butyrate, ethyl butyrate, cyclohexyl butyrate, butyl butyrate, lactones, linalool, anise oil, anise star oil, bergamot oil, basil oil, West Indian bay leaf oil, galbanum oil, apple oil, apricot oil, cassia oil, camphor laurel oil, buchu leaf oil, cardamom seed oil, cassia bark oil, chamomile roman flower oil, cinnamon bark oil, cinnamon leaf oil, clove bud oil, cognac green oil, coriander oil, cubeb oil, caraway oil, fennel sweet oil, garlic oil, ginger oil, petitgrain oil, lemon oil, lime oil, orange oil, citrus oil, Japanese red-cedar oil, camphor laurel oil, citronella oil, patchouli oil, eucalyptus oil, bay oil, grapefruit oil, mandarin oil, sandalwood oil, juniper berry oil, rose oil, ylang oil, tangerine oil, geranium oil, limonene, mint oil, peppermint oil, and the like.

### Incorporation into Foods and Beverages

The present invention also provides a food or beverage comprising the above-described flavor-improving agent or flavor composition. The concentration of the flavor-improving agent in a finished food or beverage can be determined, as appropriate, by a person skilled in the art according to the properties of the food or beverage and the required effect, and the concentration in the finished product is preferably 0.01 ppm to 5000 ppm, more preferably 1 ppm to 2000 ppm, and further preferably 10 ppm to 500 ppm.

The present invention can be directed to wide varieties of foods and beverages, including liquid, solid, semi-solid, and flowable ones, as long as the foods and beverages can benefit from the flavor improvement.

Without intending to limit the invention, the foods and beverages include liquid products such as non-alcoholic beverages, low-alcoholic beverages, alcoholic beverages, carbonated beverages, lightly carbonated beverages, coffee beverages, milk coffee, black tea, milk tea, fruits juice, vegetable-based beverages, isotonic drinks, teas, yogurt beverages, lactic acid bacteria beverages, energy drinks, soups, sauces for noodles, and the like; solid products such as curry roux, stew roux, ice cream, Lacto-Ice (ice cream with a milk solid content of 3% or higher), chocolate, milk chocolate, candy, chewing gum, gummies, jellies, cookie, ham, sausage, and snacks; and semi-solid and flowable products such as curry, stew, hashed beef, Worcestershire sauces, dipping sauces, dressings, and dairy creams. Preferred foods and beverages to which the present invention is directed exclude foods and beverages usually aged in barrels, such as western liquors and vinegars.

Of the above-described foods and beverages, preferred are non-alcoholic beverages and low-alcoholic beverages, for example, non-alcoholic beers and low-alcohol beers. Note that, in the present invention, a non-alcoholic beverage means a beverage having an ethyl alcohol concentration of lower than 1 v/v%. Meanwhile, a low-alcoholic beverage in the present invention means a beverage having an ethyl alcohol concentration of lower than 5 v/v%.

Flavor improvements obtained by adding the flavor-improving agent or flavor composition of the present invention to foods and beverages include impartment or enhancement of alcoholic savor, impartment or enhancement of milky savor, impartment or enhancement of vanilla savor, impartment or enhancement of aged savor, impartment or enhancement of high quality savor, impartment or enhancement of sparkling feel, impartment or enhancement of taste fullness, complexity, and thickness, impartment or enhancement of fatty savor, and the like. Preferred modes include, for example, impartment of alcoholic savor to non-alcoholic beers; impartment of aged savor to, enhancement of taste fullness, complexity, and thickness of, and enhancement of fat/oil savor of curry roux; enhancement of milky savor of, enhancement of taste fullness, complexity, and thickness of, and enhancement of fat/oil savor of stew roux; enhancement of sparkling feel of lightly carbonated beverages; enhancement of milky savor of, enhancement of taste fullness, complexity, and thickness of, and enhancement of vanilla savor of Lacto-Ice; impartment of high quality savor to, enhancement of milky savor of, and enhancement of taste fullness, complexity, and thickness of milk chocolate; enhancement of milky savor of and enhancement of taste fullness, complexity, and thickness of milk coffee; enhancement of milky savor of and enhancement of taste fullness, complexity, and thickness of milk tea; and the like.

Foods and beverages to which the present invention is directed may comprise various compounding agents and additives commonly used for foods and beverages. Besides the antioxidants, known antiseptics and antibacterial agents, pH adjusters, emulsifiers, cooling sensates, warming sensates, and various flavor materials described above in relation with the flavor composition of the present invention, the foods and beverages may comprise, for example, sweeteners, acidulants, bulking agents, color additives, functional materials, existing flavor-improving agents, dairy ingredients, nitrogen-containing compounds such as amino acids and peptides, and the like. Two or more of these compounding agents and additives may be used in any combination.

More specifically, examples of the sweeteners include sugar, fructose, lactose, glucose, palatinose, maltose, trehalose, sorbitol, erythritol, maltitol, reduced palatinose, xylitol, lactitol syrups, oligosaccharides, aspartame, sucralose, acesulfame potassium, saccharin, stevia, neotame, alitame, thaumatin, neohesperidin dihydrochalcone, licorice, and the like.

The acidulants include acetic acid, lactic acid, citric acid, and the like.

The bulking agents include saccharide, polysaccharide, modified starch, casein, gelatin, carboxymethyl cellulose, lecithin, and the like.

The color additives include naturally occurring color additives, organic synthetic color additives, and the like, and specifically include hibiscus color additive, huckleberry color additive, plum color additive, laver color additive, dewberry color additive, grape juice color additive, blackberry color additive, blueberry color additive, mulberry color additive, morello cherry color additive, redcurrant color additive, loganberry color additive, paprika powder, malt extract, rutin, flavonoid, red cabbage color additive, red radish color additive, adzuki bean color additive, turmeric color additive, olive tea, cowberry color additive, chlorella powder, saffron color additive, perilla color additive, strawberry color additive, chicory color additive, pecan nut color additive, red yeast rice color additive, safflower color additive, purple sweet potato color additive, lac color additive, spirulina color additive, onion color additive, tamarind color additive, capsicum pepper color additive, gardenia color additive, caramel color additive, lithospermum root color additive, rosewood color additive, krill color additive, orange color additive, carrot carotene, and the like.

The functional materials means substances having nutrient functions or bioregulatory functions, and examples thereof include animal or vegetable fats or fatty oils such as docosahexaenoic acid (DHA), eicosapentaenoic acid (EPA), DHA-and/or EPA-containing fish oils, linoleic acid, γ-linolenic acid, α-linolenic acid, lecithin, and diacylglycerol, as well as derivatives thereof; animal or plant extracts such as rosemary, sage, and perilla oils, chitin, chitosan, royal jelly, and propolis; vitamins and coenzymes such as vitamin A, vitamin D, vitamin E, vitamin F, vitamin K, coenzyme Q10, and α lipoic acid, as well as derivatives thereof; polyphenols such as γ-oryzanol, catechin, anthocyanin, isoflavone, rutin, chlorogenic acid, and theaflavin; dietary fibers such as indigestible dextrin; carbohydrates such as palatinose, xylitol, and oligosaccharide; salts such as calcium citrate malate (CCM); lactoprotein-derived substances such as casein phosphopeptide, lactoferrin, and whey peptide; lactic acid bacteria; γ-aminobutyric acid; heme iron; and the like.

The dairy ingredients include raw milk, cow's milk, whole milk powder, skim milk powder, dairy cream, lactoproteins such as casein and whey, as well as those derived from milk of goat, sheep, or the like, degradation products thereof, and the like.

Examples of known flavor improvement materials include sucralose, cyclodextrin, theanine, hesperidin glycoside, sugarcane extract, and the like.

Hereinafter, the present invention will be described in further detail based on Examples; however, the present invention is not limited to these Examples.

### Examples

The total polyphenol content and the whisky lactone content contained in each flavor-improving agent were measured on the basis of calibration curves created as follows.
1) Total polyphenol content (Folin Ciocalteu method)
   (i) 100 µL of a sample, 7.5 ml of distilled water, and 0.3 ml of Folin-Ciocalteu reagent (Merck, 0.9 N) are mixed together.
   (ii) 1.0 ml of a 20% aqueous sodium carbonate solution and 1.1 ml of distilled water are added, and mixed again, followed by standing at room temperature for 30 minutes.
   (iii) The absorbance of the obtained reaction product is measured at 765 nm. The blank is set by using distilled water.
2) Whisky lactone (Quantification based on GC analysis)
   - Instrument: N6890 series manufactured by Agilent Technologies, Inc.
   - Column: DB5 0.25 mm ID x 15 m, film thickness 0.25 um
   - Carrier: constant flow at 1.0 ml/min., helium
   - Detection: FID, 310°C, hydrogen at 30 ml/min., air at 300 ml/min., makeup at 30 ml/min.
   - Injection method: split, 1:50
   - Injection amount: 0.2 µL
   - Injection port temperature: 240°C
   - Column temperature: 1 minute at 100°C → 8°C/minute temperature ramp to 200°C, 15°C/minute temperature ramp to 300°C, holding for 5 minutes

### Preparation of Plant Extracts

### [Solvents Used for Extraction (Permittivity)]

- ethyl acetate (6.4)
- acetone (19.5)
- isopropyl alcohol (18.3)
- 1-propanol (20.1)
- normal hexane (1.9)
- ethyl alcohol (24.3; Comparative Example)

### [Example 1]

In 1 L of ethyl acetate, 100 g of a crushed material of Quercus alba was immersed, followed by immersion extraction for 72 hours. The obtained mixture was filtered to recover an ethyl acetate extract. This extract was concentrated under reduced pressure, and the obtained concentrate was diluted with a 50% aqueous propylene glycol solution to prepare a 10% solution, which was employed as Example 1.

### [Example 2]

In 1 L of acetone, 100 g of a crushed material of Quercus alba was immersed, followed by immersion extraction for 72 hours. The obtained mixture was filtered to recover an acetone extract. This extract was concentrated under reduced pressure, and the obtained concentrate was diluted with a 50% aqueous propylene glycol solution to prepare a 10% solution, which was employed as Example 2.

### [Example 3]

In 1 L of isopropyl alcohol, 100 g of a crushed material of Quercus alba was immersed, followed by immersion extraction for 72 hours. The obtained mixture was filtered to recover an isopropyl alcohol extract. This extract was concentrated under reduced pressure to obtain an isopropyl alcohol solution having a solid content adjusted to 10%, and this isopropyl alcohol solution was employed as Example 3.

### [Example 4]

In 1 L of 1-propanol, 100 g of a crushed material of Quercus alba was immersed, followed by immersion extraction for 72 hours. The obtained mixture was filtered to recover a 1-propanol extract. This extract was concentrated under reduced pressure to obtain a 1-propanol solution having a solid content adjusted to 10%, and this 1-propanol solution was employed as Example 4.

### [Example 5]

In 1 L of normal hexane, 100 g of a crushed material of Quercus alba was immersed, followed by immersion extraction for 72 hours. The obtained mixture was filtered to recover a normal hexane extract. Then, this extract was concentrated under reduced pressure, and the obtained concentrate was diluted with a 50% aqueous propylene glycol solution to prepare a 10% solution, which was employed as Example 5.

### [Example 6]

1 kg of a crushed material of Quercus alba was subjected to extraction by using a 10 L supercritical extraction apparatus manufactured by Mitsubishi Kakoki Kaisha, Ltd. The extraction was performed for 3 hours under conditions of 30 MPa, a carbon dioxide flow rate of 10 kg/h, and a temperature of 60°C, and degassing conditions of 50°C and 5 MPa. The obtained extract was diluted with a 50% aqueous propylene glycol solution to a weight which was ten times the original weight, and the diluted extract was employed as Example 6.

### [Example 7]

In 1500 ml of distilled water, 8 g of a commercially available oak extract (manufactured by FRUTAROME) was suspended, followed by extraction with 150 ml of hexane four times. The obtained extract was concentrated under reduced pressure to prepare 100 mg of a concentrate. The obtained concentrate was diluted to 8 g with a 50% aqueous propylene glycol solution, and employed as Example 7.

### [Example 8]

In 1500 ml of distilled water, 8 g of a commercially available oak extract (manufactured by FRUTAROME) was suspended, followed by extraction with 150 ml of ethyl acetate four times. The obtained extract was concentrated under reduced pressure to prepare 2.25 g of a concentrate. The obtained concentrate was diluted to 8 g with a 50% aqueous propylene glycol solution, and employed as Example 8.

### [Example 9]

In 1000 ml of distilled water, 5 g of a commercially available oak extract (manufactured by FRUTAROME) was diluted. The obtained aqueous solution was stirred with 10 ml of a synthetic adsorbent (styrene polymer: HP-20 manufactured by Mitsubishi Chemical Corporation) for 3 hours to collect components adsorbed on the resin. The mixture was filtered to collect the resin. The obtained synthetic adsorbent was washed with 50 ml of distilled water, and then washed with 20 ml of 95% ethyl alcohol to recover a fraction having adsorbed on the resin. This fraction was concentrated under reduced pressure to obtain a solution having a solid content adjusted to 10%, and this solution was employed as Example 9.

### [Example 10]

In 1000 ml of distilled water, 5 g of a commercially available oak extract (manufactured by FRUTAROME) was diluted. The obtained aqueous solution was stirred with 10 ml of a synthetic adsorbent (styrene polymer: HP-20 manufactured by Mitsubishi Chemical Corporation) for 3 hours to collect components adsorbed on the resin. The mixture was filtered to collect the resin, and the obtained synthetic adsorbent was washed with 50 ml of distilled water, and then with 20 ml of isopropyl alcohol to recover a fraction having adsorbed on the resin. This fraction was concentrated under reduced pressure to obtain a solution having a solid content adjusted to 10%, and this solution was employed as Example 10.

### [Example 11]

In a 50% aqueous propylene glycol solution, a commercially available oak extract (manufactured by FRUTAROME) was diluted to prepare a 10% solution. Into the obtained diluted material, commercially available whisky lactone (Tokyo Chemical Industry Co., Ltd.) was incorporated to adjust the whisky lactone content to 0.070% in terms of solid content, and this material was employed as Example 11.

### [Example 12]

In a 50% aqueous propylene glycol solution, a commercially available oak extract (manufactured by FRUTAROME) was diluted to prepare a 10% solution. To the obtained diluted material, commercially available whisky lactone (Tokyo Chemical Industry Co., Ltd.) was incorporated to adjust the whisky lactone content to 0.106% in terms of solid content, and this material was employed as Example 12.

### [Example 13]

In a 50% aqueous propylene glycol solution, a commercially available oak extract (manufactured by FRUTAROME) was diluted to prepare a 10% solution. To the obtained diluted material, commercially available whisky lactone (Tokyo Chemical Industry Co., Ltd.) was incorporated to adjust the whisky lactone content to 3.510% in terms of solid content, and this material was employed as Example 13.

### [Comparative Example 1]

In 1 L of a 50% aqueous ethyl alcohol solution, 100 g of chips of Quercus alba were immersed, followed by immersion extraction for 72 hours. The obtained mixture was filtered to recover an extraction liquid, and this extract was concentrated under reduced pressure. Then, the obtained concentrate was diluted with a 50% aqueous propylene glycol solution to a weight which was ten times the original weight, and this diluted material was employed as Comparative Example 1.

### [Comparative Example 2]

In 1 L of 99.5% ethyl alcohol, 100 g of chips of Quercus alba were immersed, followed by immersion extraction for 72 hours. The obtained mixture was filtered to recover an extraction liquid, and this extract was concentrated under reduced pressure. Then, the obtained concentrate was diluted with a 50% aqueous propylene glycol solution to a weight which was ten times the original weight, and this diluted material was employed as Comparative Example 2.

### [Comparative Example 3]

In a 50% aqueous propylene glycol solution, a commercially available oak extract (manufactured by FRUTAROME) was diluted to prepare a 10% solution, and this solution was employed as Comparative Example 3.

### [Comparative Example 4]

In 1500 ml of distilled water, 8 g of a commercially available oak extract (manufactured by FRUTAROME) was suspended, followed by extraction with 150 ml of ethyl acetate four times. The solid content contained in the extraction residue from which the ethyl acetate layers had been recovered was subjected to solid-liquid separation, and the aqueous layer was concentrated under reduced pressure. Then, the obtained solid content was adjusted to a 10% solution with a 20% aqueous propylene glycol solution, and this solution was employed as Comparative Example 4.

### [Comparative Example 5]

In 1500 ml of distilled water, 5 g of a commercially available oak extract (manufactured by FRUTAROME) was diluted. The obtained aqueous solution was stirred with 10 ml of a synthetic adsorbent (styrene polymer: HP-20 manufactured by Mitsubishi Chemical Corporation) for 3 hours to collect components adsorbed on the resin. The mixture was filtered to remove the resin, and the obtained aqueous layer was concentrated under reduced pressure to obtain a solid content. Further, the solid content was diluted with a 20% aqueous propylene glycol solution to a weight which was ten times the original weight, and this diluted material was employed as Comparative Example 5.

Shown below are the compositional ratios between the total polyphenol content and whisky lactone in the solid content contained in each of the flavor improvement materials (Examples and Comparative Examples described above).

| | Total polyphenol content (wt%) | Whisky lactone content (wt%) | Content ratio of whisky lactone/ total polyphenol (%) |
|---|---|---|---|
| Example 1 | 0.019 | 1.94 | 10210.53 |
| Example 2 | 76.00 | 0.158 | 0.21 |
| Example 3 | 8.85 | 0.044 | 0.50 |
| Example 4 | 11.32 | 0.048 | 0.42 |
| Example 5 | 0.06 | 0.021 | 35.00 |
| Example 6 | 0.05 | 5.7 | 11400.00 |
| Example 7 | 0.09 | 5.72 | 6355.56 |
| Example 8 | 0.31 | 0.48 | 154.84 |
| Example 9 | 48.32 | 0.188 | 0.39 |
| Example 10 | 32.4 | 0.153 | 0.47 |
| Example 11 | 35.18 | 0.070 | 0.20 |
| Example 12 | 35.18 | 0.106 | 0.30 |
| Example 13 | 35.18 | 3.51 | 9.98 |
| Comp. Ex. 1 | 22.64 | 0.014 | 0.06 |
| Comp. Ex. 2 | 43.16 | 0.074 | 0.17 |
| Comp. Ex. 3 | 35.18 | 0.056 | 0.16 |
| Comp. Ex. 4 | 34.22 | 0.00 | 0.00 |
| Comp. Ex. 5 | 35.18 | 0.00 | 0.00 |

### Incorporation into and Effects on Foods and Beverages

### Sensory evaluation 1: Effect of imparting alcoholic savor to non-alcoholic beer

Each material was evaluated by adding 100 ppm of the material to a commercially available beer-taste beverage.

Whether the material imparted an alcoholic savor to the commercially available non-alcoholic beer was evaluated by seven evaluators on a 7-grade scale, and the average point was employed as the score.

In addition, the beer-taste beverage to which no material was added was employed as control (score: 0), and used for comparison.
7 points: Very strong alcoholic savor was perceived.
6 points: Strong alcoholic savor was perceived.
5 points: Somewhat strong alcoholic savor was perceived.
4 points: Alcoholic savor was perceived.
3 points: Somewhat weak alcoholic savor was perceived.
2 points: Weak alcoholic savor was perceived.
1 point: Very weak alcoholic savor was perceived.
0 points: No difference from the control was perceived.

**Table 1**

| | Impartment of alcoholic savor |
|---|---|
| Example 1 | 6 |
| Example 3 | 7 |
| Example 7 | 7 |
| Example 8 | 6 |
| Example 9 | 7 |
| Example 10 | 7 |
| Example 11 | 6 |
| Example 12 | 6 |
| Example 13 | 7 |
| Comp. Ex. 1 | 2 |
| Comp. Ex. 4 | 1 |
| Comp. Ex. 5 | 2 |

### [Sensory evaluation 2: Effects of imparting aged savor to, enhancing taste fullness, complexity, and thickness of, and enhancing fat/oil savor of curry roux]

Each material was evaluated by adding 2000 ppm of the material to a solution of 115 g of a commercially available curry roux in 850 ml of hot water. Items evaluated include the following three: 1) whether aged curry savor was imparted, 2) whether taste fullness, complexity, and thickness were enhanced, and 3) whether fat/oil savor was enhanced.

The evaluation was conducted by 7 evaluators on a 7-grade evaluation scale, and the average point was employed as the score. In addition, the curry roux to which no material was added was employed as control (score: 0), and used for comparison.
7 points: Very strong effect was perceived.
6 points: Strong effect was perceived.
5 points: Somewhat strong effect was perceived.
4 points: Effect was perceived.
3 points: Somewhat weak effect was perceived.
2 points: Weak effect was perceived.
1 point: Very weak effect was perceived.
0 points: No difference from the control was perceived.

**Table 2**

| | Impartment of aged savor | Enhancement of taste fullness, complexity, and thickness | Enhancement of fat/oil savor |
|---|---|---|---|
| Example 1 | 6 | 6 | 6 |
| Example 4 | 6 | 6 | 5 |
| Example 7 | 7 | 7 | 6 |
| Example 8 | 5 | 6 | 7 |
| Example 10 | 6 | 7 | 6 |
| Comp. Ex. 2 | 2 | 3 | 1 |
| Comp. Ex. 4 | 2 | 2 | 1 |
| Comp. Ex. 5 | 2 | 1 | 1 |

### [Sensory evaluation 3: Enhancement of milky savor of, enhancement of taste fullness, complexity, and thickness of, and enhancement of fat/oil savor of stew roux]

Each material was evaluated by adding 1000 ppm of the material to a solution of 122 g of a commercially available stew roux in 400 ml of hot water. The item evaluated was whether fat/oil savor was imparted to the taste of the stew.

The evaluation was conducted by 7 evaluators on a 7-grade evaluation scale, and the average point was employed as the score. In addition, the stew roux to which no material was added was employed as control (score: 0), and used for comparison.
7 points: Very strong effect was perceived.
6 points: Strong effect was perceived.
5 points: Somewhat strong effect was perceived.
4 points: Effect was perceived.
3 points: Somewhat weak effect was perceived.
2 points: Weak effect was perceived.
1 point: Very weak effect was perceived.
0 points: No difference from the control was perceived.

**Table 3**

| | Enhancement of milky savor | Enhancement of taste fullness, complexity, and thickness | Impartment of fat/oil savor |
|---|---|---|---|
| Example 1 | 6 | 6 | 7 |
| Example 3 | 5 | 6 | 5 |
| Example 6 | 7 | 7 | 7 |
| Example 7 | 7 | 7 | 6 |
| Example 8 | 7 | 6 | 6 |
| Example 9 | 7 | 7 | 7 |
| Example 11 | 5 | 6 | 6 |
| Example 12 | 6 | 6 | 6 |
| Example 13 | 7 | 7 | 7 |
| Comp. Ex. 1 | 2 | 1 | 1 |
| Comp. Ex. 2 | 2 | 2 | 2 |
| Comp. Ex. 3 | 2 | 3 | 2 |
| Comp. Ex. 5 | 1 | 2 | 2 |

### [Sensory evaluation 4: Sparkling feel enhancement effect on lightly carbonated beverage]

Each material was tested for the sparkling feel enhancement effect by adding 50 ppm of the material to a commercially available lightly carbonated beverage. The item evaluated was whether the sparkling feel of the lightly carbonated beverage was enhanced.

The evaluation was conducted by 7 evaluators on a 7-grade evaluation scale, and the average point was employed as the score. In addition, the lightly carbonated beverage to which no material was added was employed as control (score: 0), and used for comparison.
7 points: Very strong effect was perceived.
6 points: Strong effect was perceived.
5 points: Somewhat strong effect was perceived.
4 points: Effect was perceived.
3 points: Somewhat weak effect was perceived.
2 points: Weak effect was perceived.
1 point: Very weak effect was perceived.
0 points: No difference from the control was perceived.

**Table 4**

| | Enhancement of sparkling feel |
|---|---|
| Example 1 | 6 |
| Example 2 | 5 |
| Example 4 | 7 |
| Example 6 | 7 |
| Example 9 | 7 |
| Example 10 | 7 |
| Example 11 | 5 |
| Example 12 | 6 |
| Example 13 | 7 |
| Comp. Ex. 1 | 1 |
| Comp. Ex. 3 | 2 |
| Comp. Ex. 5 | 1 |

### [Sensory evaluation 5: Enhancement of milky savor of, enhancement of taste fullness, complexity, and thickness of, and enhancement of vanilla savor of Lacto-Ice]

Each material was evaluated by adding 2000 ppm of the material to a vanilla-flavored Lacto-Ice. The items evaluated were the following three: 1) whether the milky savor was enhanced, 2) whether the taste fullness, complexity, and thickness were enhanced, and 3) whether the vanilla savor was enhanced.

The evaluation was conducted by 7 evaluators on a 7-grade evaluation scale, and the average point was employed as the score. In addition, the Lacto-Ice to which no material was added was employed as control (score: 0), and used for comparison.
7 points: Very strong effect was perceived.
6 points: Strong effect was perceived.
5 points: Somewhat strong effect was perceived.
4 points: Effect was perceived.
3 points: Somewhat weak effect was perceived.
2 points: Weak effect was perceived.
1 point: Very weak effect was perceived.
0 points: No difference from the control was perceived.

**Table 5**

| | Enhancement of milky savor | Enhancement of taste fullness, complexity, and thickness | Enhancement of vanilla savor |
|---|---|---|---|
| Example 1 | 6 | 6 | 6 |
| Example 4 | 6 | 6 | 6 |
| Example 5 | 6 | 5 | 6 |
| Example 7 | 5 | 5 | 6 |
| Example 9 | 7 | 6 | 7 |
| Example 11 | 6 | 5 | 6 |
| Example 12 | 6 | 7 | 6 |
| Example 13 | 7 | 7 | 7 |
| Comp. Ex. 2 | 2 | 2 | 3 |
| Comp. Ex. 3 | 1 | 2 | 2 |
| Comp. Ex. 4 | 3 | 2 | 3 |
| Comp. Ex. 5 | 2 | 2 | 1 |

### [Sensory evaluation 6: Impartment of high quality savor to, enhancement of milky savor of, and enhancement of taste fullness, complexity, and thickness of milk chocolate]

Each material was tested for the effects of enhancing the high quality savor of, enhancing the milky savor of, and enhancing the taste fullness, complexity, and thickness of chocolate by adding 1,000 ppm of the material to milk chocolate. Note that the high quality savor means the character obtained from a western liquor-like flavor unique to high quality chocolate.

The evaluation was conducted by 7 evaluators on a 7-grade evaluation scale, and the average point was employed as the score. In addition, the milk chocolate to which no material was added was employed as control (score: 0), and used for comparison.
7 points: Very strong effect was perceived.
6 points: Strong effect was perceived.
5 points: Somewhat strong effect was perceived.
4 points: Effect was perceived.
3 points: Somewhat weak effect was perceived.
2 points: Weak effect was perceived.
1 point: Very weak effect was perceived.
0 points: No difference from the control was perceived.

**Table 6**

| | Enhancement of high quality savor | Enhancement of milky savor | Enhancement of taste fullness, complexity, and thickness |
|---|---|---|---|
| Example 2 | 5 | 5 | 5 |
| Example 3 | 6 | 6 | 6 |
| Example 7 | 6 | 7 | 7 |
| Example 8 | 7 | 7 | 7 |
| Example 9 | 6 | 6 | 7 |
| Example 10 | 7 | 7 | 7 |
| Example 11 | 5 | 5 | 6 |
| Example 12 | 6 | 6 | 7 |
| Example 13 | 7 | 7 | 7 |
| Comp. Ex. 2 | 2 | 2 | 2 |
| Comp. Ex. 3 | 1 | 2 | 2 |
| Comp. Ex. 5 | 1 | 1 | 2 |

### [Sensory evaluation 7: Enhancement of milky savor of and enhancement of taste fullness, complexity, and thickness of milk coffee]

Each material was tested for the effects of enhancing the milky savor of and enhancing the taste fullness, complexity, and thickness of milk coffee by adding 50 ppm of the material to a canned milk coffee.

The evaluation was conducted by 7 evaluators on a 7-grade evaluation scale, and the average point was employed as the score. In addition, the milk coffee to which no material was added was employed as control (score: 0), and used for comparison.
7 points: Very strong effect was perceived.
6 points: Strong effect was perceived.
5 points: Somewhat strong effect was perceived.
4 points: Effect was perceived.
3 points: Somewhat weak effect was perceived.
2 points: Weak effect was perceived.
1 point: Very weak effect was perceived.
0 points: No difference from the control was perceived.

**Table 7**

| | Enhancement of milky savor | Enhancement of taste fullness, complexity, and thickness |
|---|---|---|
| Example 1 | 6 | 6 |
| Example 6 | 7 | 7 |
| Example 7 | 7 | 7 |
| Example 8 | 7 | 7 |
| Example 9 | 6 | 7 |
| Example 10 | 7 | 7 |
| Example 11 | 6 | 6 |
| Example 12 | 6 | 7 |
| Example 13 | 7 | 7 |
| Comp. Ex. 1 | 3 | 2 |
| Comp. Ex. 4 | 2 | 1 |
| Comp. Ex. 5 | 3 | 3 |

### [Sensory evaluation 8: Enhancement of milky savor of and enhancement of taste fullness, complexity, and thickness of milk tea]

Each material was tested for the effects of enhancing the milky savor of and enhancing the taste fullness, complexity, and thickness of milk tea by adding 50 ppm of the material to a canned milk tea.

The evaluation was conducted by 7 evaluators on a 7-grade evaluation scale, and the average point was employed as the score. In addition, the milk tea to which no material was added was employed as control (score: 0), and used for comparison.
7 points: Very strong effect was perceived.
6 points: Strong effect was perceived.
5 points: Somewhat strong effect was perceived.
4 points: Effect was perceived.
3 points: Somewhat weak effect was perceived.
2 points: Weak effect was perceived.
1 point: Very weak effect was perceived.
0 points: No difference from the control was perceived.

**Table 8**

| | Enhancement of milky savor | Enhancement of taste fullness, complexity, and thickness |
|---|---|---|
| Example 1 | 6 | 5 |
| Example 3 | 7 | 6 |
| Example 4 | 6 | 7 |
| Example 8 | 7 | 7 |
| Example 9 | 6 | 7 |
| Example 10 | 6 | 7 |
| Example 11 | 5 | 6 |
| Example 12 | 5 | 7 |
| Example 13 | 6 | 7 |
| Comp. Ex. 2 | 2 | 1 |
| Comp. Ex. 3 | 2 | 2 |
| Comp. Ex. 5 | 1 | 2 |

The results of the sensory evaluations showed that the plant extracts of Examples each having the specified whisky lactone:total polyphenol ratio exhibited flavor improvement effects which were advantageous over Comparative Examples.

## Claims

1. A flavor-improving agent comprising an extract from a plant of the genus Quercus of the family Fagaceae, wherein the ratio of whisky lactone content to total polyphenol content is 0.2% or higher.

2. The flavor-improving agent according to claim 1, wherein the plant of the genus Quercus of the family Fagaceae is Quercus alba, Quercus petraea, or Quercus robur.

3. The flavor-improving agent according to claim 1 or 2, wherein the extract is obtained by extraction from a plant of the genus Quercus of the family Fagaceae with a solvent having a permittivity of 21 or lower or supercritical carbon dioxide.

4. The flavor-improving agent according to claim 1 or 2, wherein the extract is obtained by contacting a primary extract from the plant of the genus Quercus of the family Fagaceae with a resin, removing by elution a water-soluble fraction adsorbed on the resin, and then recovering hydrophobic components adsorbed on the resin.

5. The flavor-improving agent according to claim 1 or 2, wherein the extract is obtained by contacting a primary extract from the plant of the genus Quercus of the family Fagaceae with an organic solvent having a permittivity of 21 or lower, followed by recovery of hydrophobic components.

6. The flavor-improving agent according to claim 1 or 2, wherein the extract is obtained by adding whisky lactone to a primary extract from the plant of the genus Quercus of the family Fagaceae such that the ratio of whisky lactone content to total polyphenol content is 0.2% or higher.

7. A flavor composition comprising the flavor-improving agent according to any one of claims 1 to 6.

8. A food or beverage, excluding vinegar and whisky, comprising the flavor-improving agent according to any one of claims 1 to 6 or the flavor composition according to claim 7.

9. A method for producing the flavor-improving agent according to claim 1 or 2, the method comprising performing extraction from a plant of the genus Quercus of the family Fagaceae with a solvent having a permittivity of 21 or lower or supercritical carbon dioxide.

10. A method for producing the flavor-improving agent according to claim 1 or 2, the method comprising contacting a primary extract from the plant of the genus Quercus of the family Fagaceae with a resin, removing by elution a water-soluble fraction adsorbed on the resin, and then recovering hydrophobic components adsorbed on the resin.

11. A method for producing the flavor-improving agent according to claim 1 or 2, the method comprising adding whisky lactone to a primary extract from the plant of the genus Quercus of the family Fagaceae such that the ratio of whisky lactone content to total polyphenol content is 0.2% or higher.

12. A method for improving a flavor of a food or beverage, the method comprising adding the flavor-improving agent according to any one of claims 1 to 6 or the flavor composition according to claim 7 to the food or beverage.
